# EUROPEAN PATENT APPLICATION

(11) **EP 4 507 163 A1**
(43) Date of publication of application: **12.02.2025**
(21) Application number: 23920769.9
(22) Date of filing: 31.10.2023
(51) Int. Cl.: H02J 9/06

(54) **HYDROGEN FUEL-BASED MOBILE POWER GENERATION VEHICLE CONTROL SYSTEM AND METHOD**

(30) Priority: 07.02.2023 CN 202310134658
(71) Applicant: State Grid Zhejiang Jiashan Power Supply Co., Ltd., Jiaxing, Zhejiang 314100 (CN)
(72) Inventor: ZHANG, Chongbiao, Jiaxing, Zhejiang 314100 (CN); CHEN, Jinwei, Jiaxing, Zhejiang 314100 (CN); GAO, Bo, Jiaxing, Zhejiang 314100 (CN); HE, Yong, Jiaxing, Zhejiang 314100 (CN); HU, Sheng, Jiaxing, Zhejiang 314100 (CN); ZHAO, Yanmin, Jiaxing, Zhejiang 314100 (CN)
(74) Representative: Elzaburu S.L.P.
(86) International application number: PCT/CN2023/128377
(87) International publication number: WO 2024/164577

(57) **Abstract**

Disclosed are a control system and method for a hydrogen-powered vehicle-mounted mobile generator. The control system for a hydrogen-powered vehicle-mounted mobile generator includes a vehicle controller and a hydrogen storage system. The vehicle controller is connected to a first DC/DC converter, and the first DC/DC converter is connected to a PCS. The hydrogen storage system is connected to a hydrogen fuel battery pack, the hydrogen fuel battery pack is connected to a second DC/DC converter, the second DC/DC converter is connected to the PCS and a buffer lithium battery system, respectively, and the PCS is also connected to an off-grid switching device; and the control system also includes a centralized monitoring system which is configured to control the charging and discharging of the buffer lithium battery system. The present invention further discloses a control method for a hydrogen-powered vehicle-mounted mobile generator. The present invention achieves the effect of power peak load shifting by controlling the power generation of the hydrogen storage system and the hydrogen fuel battery pack and adjusting the buffer lithium battery system, ensuring the power generation supply of the vehicle-mounted mobile generator during peak loads.

## Description

### Technical Field

The present invention relates to the technical field of new energy power generation vehicles, and more particularly, to a control system and method for a hydrogen-powered vehicle-mounted mobile generator.

### Background Art

A vehicle-mounted mobile generator system, as a backup power source, is used for emergency tasks such as electric power guarantee for large-scale events, emergency response to power grids in substation areas, combating major natural disasters, and temporary electricity supply in areas with power shortages. A vehicle-mounted mobile generator mainly consists of a car chassis, a power generation system, and the like. There are three types of combinations of a car chassis and a power generation system in the existing vehicle-mounted mobile generators: a diesel car chassis and a diesel generator set, a diesel car chassis and a lithium battery pack, and a diesel car chassis and a hydrogen fuel battery. The diesel car chassis emits polluting gases and particulate matters during operation, which does not meet the requirements of low-carbon environmental protection. Diesel generators are noisy when running, and thus do not meet the requirement of low noise. The lithium battery pack has a low energy density and does not meet the requirement of short energy replenishment time. Therefore, the existing vehicle-mounted mobile generator technology cannot fully meet the requirements of green environmental protection, long power supply time, short energy replenishment time, and no noise. Moreover, during peak loads, the vehicle-mounted mobile generator may experience insufficient power generation. The present invention proposes a control system and method for a hydrogen-powered vehicle-mounted mobile generator to solve the technical problem of insufficient power generation under peak loads.

Chinese Patent Application No. CN217804500U, entitled "Hydrogen Energy Transportation Vehicle-mounted Generator", discloses a hydrogen energy transportation vehicle-mounted generator, which relates to the technical field of vehicle-mounted generators. The hydrogen energy transportation vehicle-mounted generator includes a hydrogen energy transportation vehicle-mounted generator body, where the hydrogen energy transportation vehicle-mounted generator body has a ventilation slot on a rear side, a push rod is finally driven to move upward by opening a cover, and finally, a sliding rod is pushed to move upward together with a cleaning brush on a top surface of a dust-blocking blade; and therefore, the dust accumulated on a top of the dust-blocking blade is effectively cleaned. However, although Chinese Patent Application No. CN217804500U has a good dust removal effect, it cannot solve the above-mentioned problem of insufficient power generation.

### Summary of the Invention

In order to solve the problem that current vehicle-mounted mobile generators are prone to insufficient power supply during peak loads, the present invention provides a control system and method for a hydrogen-powered vehicle-mounted mobile generator, which achieves the effect of power peak load shifting by controlling the power generation of a hydrogen storage system and a hydrogen fuel battery pack, and adjusting a buffer lithium battery system, ensuring the power generation supply of the vehicle-mounted mobile generator during peak loads.

In order to achieve the above object, the present invention adopts the following technical solution: a control system for a hydrogen-powered vehicle-mounted mobile generator comprising a vehicle controller and a hydrogen storage system, where the vehicle controller is connected to a first DC/DC converter, and the first DC/DC converter is connected to a PCS; the hydrogen storage system is connected to a hydrogen fuel battery pack, the hydrogen fuel battery pack is connected to a second DC/DC converter, the second DC/DC converter is connected to the PCS and a buffer lithium battery system, respectively, and the PCS is also connected to an off-grid switching device; and also includes a centralized monitoring system, the centralized monitoring system is configured to control the charging and discharging of the buffer lithium battery system.

According to the present invention, after the connection with the load is completed, the vehicle controller is triggered to switch to a "power generation position", a first switch Q1 is closed, the electrical energy output of a vehicle-mounted generator chassis power battery is incorporated into a DC bus, at this time, a second switch Q2 is closed, and the hydrogen fuel battery pack generates electricity; when a mains supply is normal, the off-grid switching device is closed; when the mains supply suddenly fails, the off-grid switching device is disconnected; when the mains supply suddenly supplies power, the off-grid switching device is immediately closed; and the centralized monitoring system controls the charging and discharging of the buffer lithium battery system to cope with the high and low loads of the hydrogen fuel battery pack.

Preferably, the first switch Q1 is arranged between the first DC/DC converter and the PCS, and the second switch Q2 is arranged between the second DC/DC converter and the PCS; when the vehicle controller is switched to the "power generation position", the first switch Q1 is closed.

According to the present invention, the second switch Q2 is configured to control the connection of the hydrogen fuel battery pack and the hydrogen storage system, and the first switch Q1 is configured to control the vehicle controller to switch to the "power generation position"; and after the vehicle controller is triggered to switch to the "power generation position", the first switch Q1 is closed.

Preferably, the PCS includes an internal DC/AC converter and a control unit, where the PCS receives the commands from the centralized monitoring system through the remote communication module.

According to the present invention, the PCS can convert the DC generated by power generation into AC to ensure the power supply to the load when the mains supply is disconnected; and the control unit inside the PCS can receive the command scheduling of the centralized monitoring system.

Preferably, the hydrogen storage system includes a plurality of hydrogen bottles, and the hydrogen bottles are divided into two groups and are fixed by brackets.

Preferably, the centralized monitoring system further includes a visualization module for displaying real-time power generation information of the vehicle-mounted mobile generator, and the visualization module is also connected to a monitoring system configured to monitor the power generation process of the vehicle-mounted mobile generator.

According to the present invention, the centralized monitoring system is a main control center for an emergency power supply, which is connected to the PCS, the buffer lithium battery system, the hydrogen storage system, the hydrogen fuel battery pack, and the second DC/DC converter respectively for corresponding control; the centralized monitoring system also includes the visualization module; and the visualization module includes a plurality of display units, and the real-time power generation information is displayed by the display units. In addition, since the visualization module is also connected to the monitoring system, the data monitored by the monitoring system can also be visually displayed.

A control method for a hydrogen-powered vehicle-mounted mobile generator, which uses the control system for a hydrogen-powered vehicle-mounted mobile generator, including the following steps:
S1, the vehicle-mounted mobile generator is electrically connected to the load, and the vehicle controller is automatically triggered to switch to the "power generation position";
S2, when a mains supply is normal, the PCS is in a grid-connected mode, and active power and reactive power curve operations are adjusted in four quadrants;
S3, when the mains supply is disconnected, the PCS enters a standby mode and the off-grid switching device is immediately disconnected, allowing the PCS to enter an off-line mode;
S4, when the mains supply returns to normal, the PCS automatically enters the standby mode and the off-grid switching device is immediately closed, allowing the PCS to automatically enter the grid-connected mode; and
S5, after the power generation is completed, the electrical connection between the vehicle-mounted mobile generator and the load is disconnected, switching the vehicle controller out the "power generation position".

According to the present invention, a cable of the vehicle-mounted mobile generator is connected to the load, the vehicle controller is then automatically triggered to switch to the "power generation position", and the modes of the PCS are controlled by the centralized monitoring system; when the mains supply is normal, the PCS is in the grid-connected mode; when the mains supply is disconnected, the PCS is in the standby mode and the off-grid switching device is immediately disconnected, and the PCS is in the off-line mode; there are three situations at this time, which respectively correspond to different charging and discharging commands; after the mains supply returns to normal, the PCS enters the standby mode, the off-grid switching device is also closed immediately, and the PCS automatically enters the grid-connected mode; and after the power generation is completed, the connection between the cable and the load is cut off, and the "power generation position" mode of the vehicle controller is disconnected.

Preferably, step S3 includes the following three situations:
Q1, when the power supply of the hydrogen fuel battery pack and the power demand are balanced, the buffer lithium battery system does not charge or discharge;
Q2, when the power supply of the hydrogen fuel battery pack is less than the power demand, the buffer lithium battery system starts and discharges to the PCS; and
Q3, when the power supply of the hydrogen fuel battery pack is greater than the power demand, the excess power supply of the hydrogen fuel battery pack charges a buffer lithium battery.

According to the present invention, a balance between the power supply of the hydrogen fuel battery pack and the power demand is determined to ensure the optimal power supply method.

The present invention has the beneficial effects that the control system and method for a hydrogen-powered vehicle-mounted mobile generator achieve the effect of power peak load shifting by controlling the power generation of the hydrogen storage system and the hydrogen fuel battery pack and adjusting the buffer lithium battery system, ensuring the power generation supply of the vehicle-mounted mobile generator during peak loads; and in addition, the present invention can meet the requirements of green environmental protection, low noise, long power supply time, and short energy replenishment time.

### Brief Description of the Drawings

FIG. 1 is a system schematic diagram of a control system and method for a hydrogen-powered vehicle-mounted mobile generator according to the present invention;
FIG. 2 is a method flow chart of a control system and method for a hydrogen-powered vehicle-mounted mobile generator according to the present invention;
FIG. 3 is a schematic diagram from a perspective of a vehicle-mounted mobile generator corresponding to a control system and method for a hydrogen-powered vehicle-mounted mobile generator according to the present invention;
FIG. 4 is a schematic diagram from another perspective of a vehicle-mounted mobile generator corresponding to a control system and method for a hydrogen-powered vehicle-mounted mobile generator according to the present invention; and
FIG. 5 is a system operation flow chart of a vehicle-mounted mobile generator corresponding to a control system and method for a hydrogen-powered vehicle-mounted mobile generator according to the present invention.

1 denotes a hydrogen storage system; 2 denotes a hydrogen fuel battery pack; 3 denotes a buffer lithium battery system; and 4 denotes a PCS.

### Detailed Description of the Invention

### Embodiment 1:

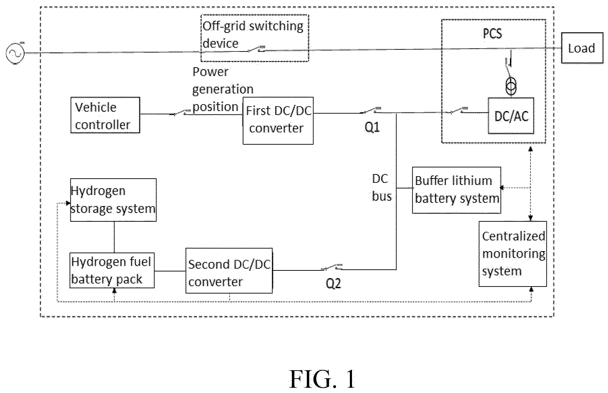

This embodiment provides a control system for a hydrogen-powered vehicle-mounted mobile generator. Referring to FIG. 1 to FIG. 4, the control system includes a vehicle controller and a hydrogen storage system 1. The vehicle controller is connected to a first DC/DC converter, and the first DC/DC converter is connected to a PCS 4. The hydrogen storage system is connected to a hydrogen fuel battery pack 2, the hydrogen fuel battery pack is connected to a second DC/DC converter, the second DC/DC converter is connected to the PCS and a buffer lithium battery system 3, respectively, and the PCS is also connected to an off-grid switching device. A centralized monitoring system is further included, and the centralized monitoring system is configured to control the charging and discharging of the buffer lithium battery system. In this embodiment, the centralized monitoring system is a main control center for an emergency power supply, which is connected to the PCS, the buffer lithium battery system, the hydrogen storage system, the hydrogen fuel battery pack, and the second DC/DC converter, respectively.

Referring to FIG. 1, a first switch Q1 is arranged between the first DC/DC converter and the PCS, and a second switch Q2 is arranged between the second DC/DC converter and the PCS. When the vehicle controller is switched to a "power generation position", the first switch Q1 is closed. In this embodiment, the second switch Q2 is configured to control the connection of the hydrogen fuel battery pack and the hydrogen storage system.

The PCS includes an internal DC/AC converter and a control unit. The PCS receives the commands from the centralized monitoring system through the remote communication module. In this embodiment, the PCS can convert the DC generated by power generation into AC to ensure the power supply to the load when a mains supply is disconnected. The control unit inside the PCS can receive the command scheduling of the centralized monitoring system. The rated power of PCS is 200 kVA, which ensures the safety of the system and equipment under various fault situations.

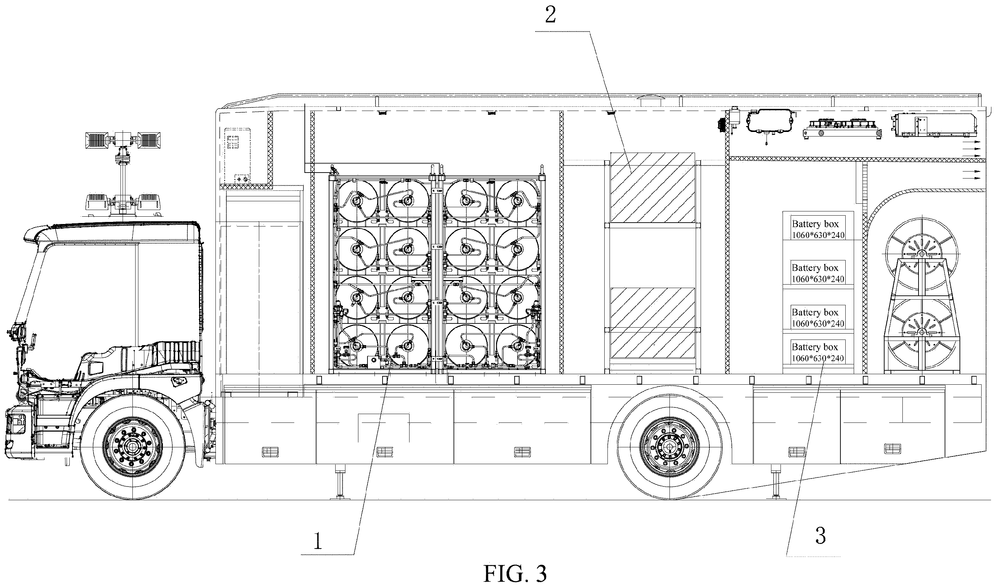

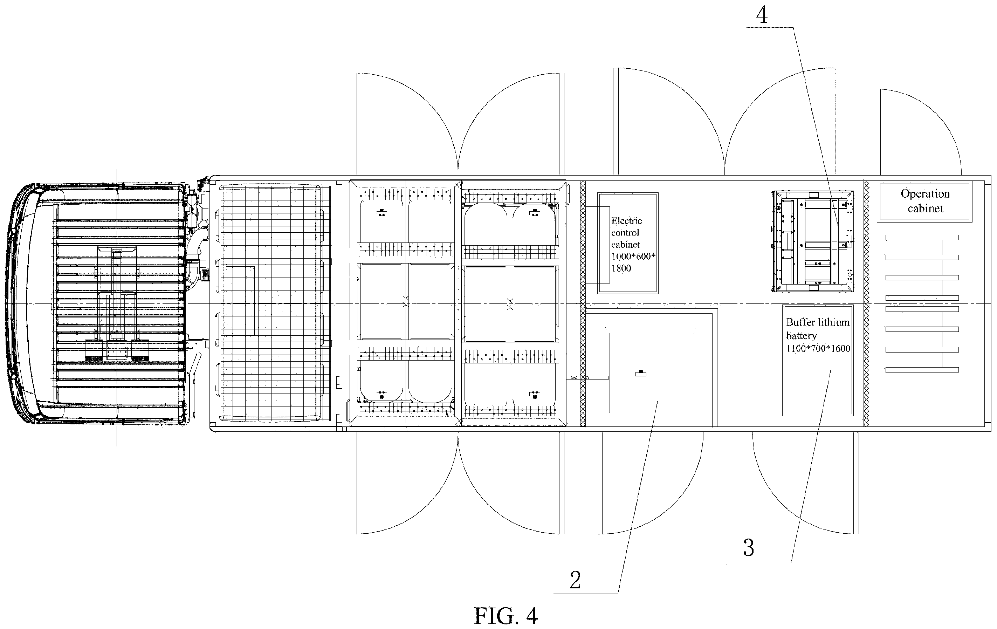

Referring to FIG. 3 and FIG. 4, the hydrogen storage system includes a plurality of hydrogen bottles. The hydrogen bottles are divided into two groups and are fixed by brackets.

The centralized monitoring system further comprises a visualization module for displaying real-time power generation information of the vehicle-mounted mobile generator, and the visualization module is also connected to a monitoring system for monitoring the power generation process of the mobile power generation vehicle. In this embodiment, the visualization module is generally a combination of a plurality of display units and a controller, and the display units are generally LED display screens.

In this embodiment, after the connection with the load is completed, the vehicle controller is triggered to switch to the "power generation position", the first switch Q1 is closed, the electrical energy output of a vehicle-mounted generator chassis power battery is incorporated into a DC bus, at this time the second switch Q2 is closed, and the hydrogen fuel battery pack generates electricity. When the mains supply is normal, the off-grid switching device is closed. When the mains supply suddenly fails, the off-grid switching device is disconnected. When the mains supply suddenly supplies power, the off-grid switching device is immediately closed. The centralized monitoring system controls the charging and discharging of the buffer lithium battery system to cope with the high and low loads of the hydrogen fuel battery pack.

In this embodiment, the centralized monitoring system is a main control center for an emergency power supply, which is connected to the PCS, the buffer lithium battery system, the hydrogen storage system, the hydrogen fuel battery pack, and the second DC/DC converter respectively for corresponding control. The centralized monitoring system also includes the visualization module. The visualization module includes a plurality of display units, and the real-time power generation information is displayed by the display units. In addition, since the visualization module is also connected to the monitoring system, the data monitored by the monitoring system can also be visually displayed.

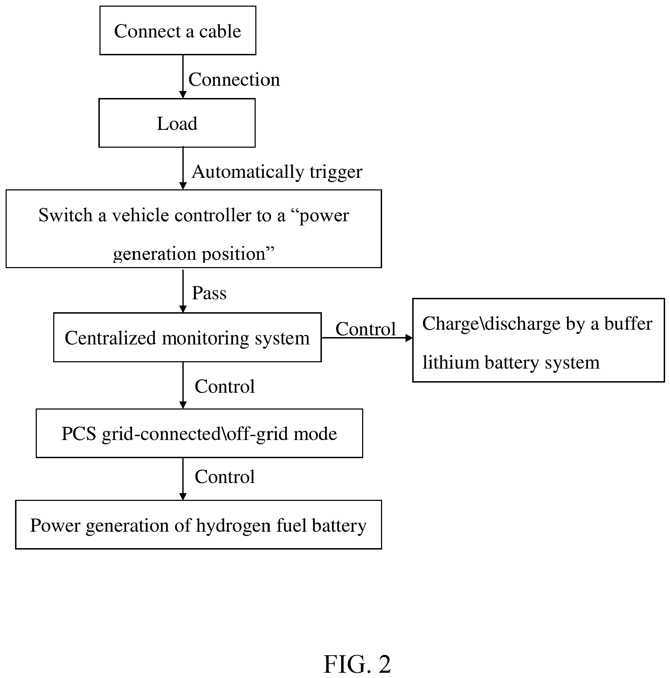

This embodiment also provides a control method for a hydrogen-powered vehicle-mounted mobile generator. Referring to FIG. 2, the control method uses the control system for a hydrogen-powered vehicle-mounted mobile generator, including the following steps:
S1, the vehicle-mounted mobile generator is electrically connected to the load, and the vehicle controller is automatically triggered to switch to the "power generation position";
S2, when a mains supply is normal, the PCS is in a grid-connected mode, and active power and reactive power curve operations are adjusted in four quadrants;
S3, when the mains supply is disconnected, the PCS enters a standby mode and the off-grid switching device is immediately disconnected, allowing the PCS to enter an off-line mode; specifically, in this case, the following three situations are included:
   situation Q1, when the power supply of the hydrogen fuel battery pack and the power demand are balanced, the buffer lithium battery system does not charge or discharge;
   situation Q2, when the power supply of the hydrogen fuel battery pack is less than the power demand, the buffer lithium battery system starts and discharges to the PCS, so as to compensate for the insufficient power supply of the hydrogen fuel battery pack;
   situation Q3, when the power supply of the hydrogen fuel battery pack is greater than the power demand, the excess power supply of the hydrogen fuel battery pack charges a buffer lithium battery, so as to solve the problem of power consumption of the hydrogen fuel battery pack; a balance between the power supply of the hydrogen fuel battery pack and the power demand is determined to ensure the optimal power supply method;
S4, when the mains supply returns to normal, the PCS automatically enters the standby mode and the off-grid switching device is immediately closed, allowing the PCS to automatically enter the grid-connected mode; and
S5, after the power generation is completed, the electrical connection between the vehicle-mounted mobile generator and the load is disconnected, and the vehicle controller is switched out the "power generation position", at this time, the connection between a cable and the load is cut off, and the load is powered by the mains supply.

In this embodiment, the cable of the vehicle-mounted mobile generator is connected to the load, the vehicle controller is automatically triggered to switch to the "power generation position", and the modes of the PCS are controlled by the centralized monitoring system. When the mains supply is normal, the PCS is in the grid-connected mode. When the mains supply is disconnected, the PCS is the standby mode and the off-grid switching device is immediately disconnected, and the PCS is in the off-line mode. There are three situations at this time, which respectively correspond to different charging and discharging commands. After the mains supply returns to normal, the PCS enters the standby mode, the off-grid switching device is also closed immediately, and the PCS automatically enters the grid-connected mode. After the power generation is completed, the connection between the cable and the load is cut off, and the "power generation position" mode of the vehicle controller is disconnected.

### Embodiment 2

On the basis of Embodiment 1, a corresponding hydrogen-powered vehicle-mounted mobile generator is provided, which includes an electric chassis system, a hydrogen fuel power generation system, a control system, a monitoring system, and a ventilation cooling system. The electric chassis system includes an original on-board battery pack. The hydrogen fuel power generation system includes a hydrogen fuel battery pack, a hydrogen storage system, and a buffer lithium battery system. The control system includes an operating system, an electronic control system, and a power conversion system (PCS). The monitoring system includes a plurality of hydrogen concentration sensors, temperature and humidity monitoring systems, fire smoke sensing and fire extinguishing systems, and hydrogen pressure sensors. The ventilation cooling system includes an outdoor air conditioning unit, an indoor air conditioning unit, a hydrogen fuel battery water-cooling system, a DC/DC auxiliary cooling system, and a lithium battery cooling system.

The main function of the original on-board chassis battery pack is to provide a power source for an electric vehicle chassis, with a battery capacity of no less than 280 kWh, ensuring a driving distance of no less than 200 KM. The battery may be mounted on the back or side.

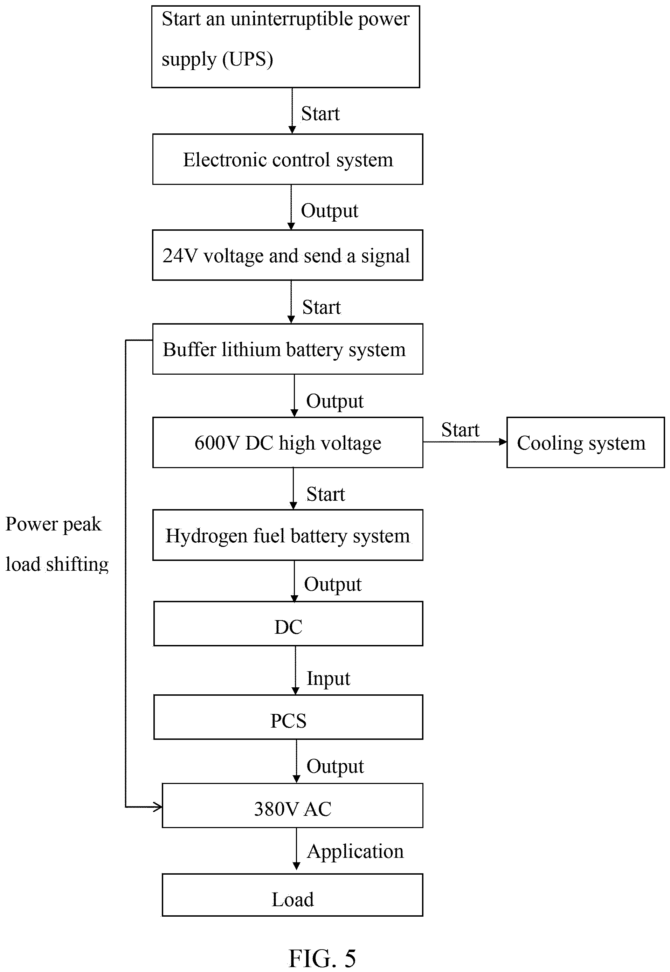

The operation process of the hydrogen-powered vehicle-mounted mobile generator is as shown in FIG. 5: first, a 24V battery on a vehicle chassis is started, and a 24V DC voltage is output to provide a starting power for the control system. After a control cabinet starts working, a 24V DC voltage is output, and a signal is sent to the buffer lithium battery system. The lithium battery voltage is adjusted to a DC bus voltage by the DC/DC converter so as to achieve parallel operation and output a 600V DC high voltage. At this time, the hydrogen fuel battery pack and the ventilation cooling system start working. After about 15 seconds of operation, hydrogen fuel batteries output 380V DC. The PCS converts the 380V DC into 380V AC, and the output electrical energy is applied to a load. In addition, when the power generation of the hydrogen fuel battery pack is insufficient under peak loads, the buffer lithium battery system discharges to the PCS. When the power generation of the hydrogen fuel battery pack is sufficient under low loads, the hydrogen fuel power generation system charges the buffer lithium battery system. Therefore, the effect of power peak load shifting is realized.

The preferred embodiments of the present invention are described in detail above. It should be understood that those skilled in the art can make many modifications and changes based on the concept of the present invention without creative efforts. Therefore, any technical solutions that can be obtained by those skilled in the art through logical analysis, reasoning or limited experiments according to the concept of the present invention and on the basis of the prior art should fall within the scope of protection defined by the Claims.

## Claims

1. A control system for a hydrogen-powered vehicle-mounted mobile generator, **characterized by** comprising a vehicle controller and a hydrogen storage system, wherein the vehicle controller is connected to a first DC/DC converter, and the first DC/DC converter is connected to a PCS; the hydrogen storage system is connected to a hydrogen fuel battery pack, the hydrogen fuel battery pack is connected to a second DC/DC converter, the second DC/DC converter is connected to the PCS and a buffer lithium battery system, respectively, and the PCS is also connected to an off-grid switching device; and also includes a centralized monitoring system, the centralized monitoring system is configured to control the charging and discharging of the buffer lithium battery system.

2. The control system for a hydrogen-powered vehicle-mounted mobile generator according to claim 1, **characterized in that** a first switch Q1 is arranged between the first DC/DC converter and the PCS, and a second switch Q2 is arranged between the second DC/DC converter and the PCS; when the vehicle controller is switched to a "power generation position", the first switch Q1 is closed.

3. The control system for a hydrogen-powered vehicle-mounted mobile generator according to claim 1 or 2, **characterized in that** the PCS comprises an internal DC/AC converter and a control unit; and the PCS receives the commands from the centralized monitoring system through the remote communication module.

4. The control system for a hydrogen-powered vehicle-mounted mobile generator according to claim 1 or 2, **characterized in that** the hydrogen storage system comprises a plurality of hydrogen bottles; and the hydrogen bottles are divided into two groups and are fixed by brackets.

5. The control system for a hydrogen-powered vehicle-mounted mobile generator according to claim 1, **characterized in that** the centralized monitoring system further comprises a visualization module for displaying real-time power generation information of the vehicle-mounted mobile generator, and the visualization module is also connected to a monitoring system for monitoring the power generation process of the mobile power generation vehicle.

6. A control method for a hydrogen-powered vehicle-mounted mobile generator, which uses the control system for a hydrogen-powered vehicle-mounted mobile generator according to any one of claims 1-5, **characterized by** comprising the following steps:
S1, the vehicle-mounted mobile generator is electrically connected to the load, and the vehicle controller is automatically triggered to switch to the "power generation position";
S2, when a mains supply is normal, the PCS is in a grid-connected mode, and active power and reactive power curve operations are adjusted in four quadrants;
S3, when the mains supply is disconnected, the PCS enters a standby mode and the off-grid switching device is immediately disconnected, allowing the PCS to enter an off-line mode;
S4, when the mains supply returns to normal, the PCS automatically enters the standby mode and the off-grid switching device is immediately closed, allowing the PCS to automatically enter the grid-connected mode; and
S5, after the power generation is completed, the electrical connection between the vehicle-mounted mobile generator and the load is disconnected, switching the vehicle controller out the "power generation position".

7. The control method for a hydrogen-powered vehicle-mounted mobile generator according to claim 6, **characterized in that** step S3 comprises the following three situations:
Q1, when the power supply of the hydrogen fuel battery pack and the power demand are balanced, the buffer lithium battery system does not charge or discharge;
Q2, when the power supply of the hydrogen fuel battery pack is less than the power demand, the buffer lithium battery system starts and discharges to the PCS; and
Q3, when the power supply of the hydrogen fuel battery pack is greater than the power demand, the excess power supply of the hydrogen fuel battery pack charges a buffer lithium battery.
